# EUROPÄISCHE PATENTSCHRIFT

(11) **EP 2 211 444 B1**
(45) Veröffentlichungstag und Bekanntmachung des Hinweises auf die Patenterteilung: **27.11.2013**
(21) Anmeldenummer: 10150670.7
(22) Anmeldetag: 13.01.2010
(51) Int. Cl.: H02K 9/06, F04D 25/08, F04D 25/06, H02K 5/20

(54) **Elektromotor mit Kühlventilatorwirkung**
Electric motor with cooling ventilator effect
Moteur électrique avec un effet de ventilateur de refroidissement

(30) Priorität: 27.01.2009 DE 202009001033 U
(43) Veröffentlichungstag der Anmeldung: 28.07.2010
(73) Patentinhaber: ebm-papst Mulfingen GmbH & Co. KG, 74673 Mulfingen (DE)
(72) Erfinder: Best, Dieter, 74653, Ingelfingen (DE); Maschke, Matthias, 74635 Kupferzell (DE); Reichert, Erik, 97944, Boxberg (DE); Kurz, Martin, 71543, Wüstenrot (DE)
(74) Vertreter: Patentanwälte Dr. Solf & Zapf

(56) Entgegenhaltungen:
- EP-A1- 0 488 961
- EP-A2- 0 921 318
- DE-A1- 3 917 040
- DE-A1- 4 234 017
- US-A1- 2006 022 529

## Beschreibung

Die Erfindung betrifft einen Elektromotor mit einem Stator und einem außenlaufenden Rotor, bestehend aus einer Rotorglocke und einer als Lüfterrad wirkenden Rotorabdeckung, wobei die Rotorglocke mehrere Durchbrüche in ihrem Glockenboden aufweist, und die Rotorabdeckung mehrere Ausströmöffnungen aufweist.

Solche Elektromotoren werden insbesondere zum Antrieb eines Lüfterrads innerhalb einer Lüftungseinheit verwendet, wobei sich die Bauteile des Elektromotors während des Betriebs erwärmen und dadurch schneller verschleißen und außerdem der Wirkungsgrad des Elektromotors durch die Erwärmung reduziert wird.

In der DE 42 34 017 A1 ist ein Elektromotor beschrieben, wobei ein an die Rotorglocke des Elektromotors angebrachtes Hauptlüfterrad, welches als Axial- oder Radiallüfterrad ausgebildet ist, einen Unterdruck im Ansaugbereich in der Umgebung des Glockenbodens der Rotorglocke erzeugt. Durch den Unterdruck wird die im Inneren des Elektromotors befindliche Luft durch die im Glockenboden angebrachten Durchbrüche angesaugt, wobei neue Luft durch den Spalt zwischen Rotorglocke und Statorflansch und/oder in der Rotorglocke angebrachten Durchströmungsöffnungen in den Elektromotor einströmt. Dies bewirkt eine Kühlung des Elektromotors. Die Rotorabdeckung auf der Außenseite des Glockenbodens dient als Hilfslüfterrad mit Ausströmöffnungen und verstärkt den Luftstrom innerhalb des Elektromotors. Die Kühlung des Elektromotors hat wesentliche positive Auswirkungen auf die Lebensdauer und Leistung des Elektromotors. Ein Nachteil der Durchbrüche im Glockenboden zusammen mit den Ausströmöffnungen des Hilfslüfterrads ist, das Fremdpartikel wie Schmutz, Staub oder Feuchtigkeit in den Motor eindringen können und unter Umständen die Kühlwirkung negativ beeinflussen oder sogar die Bauteile des Elektromotors beschädigen.

Aus der EP 0 488 961 A1 ist ein gattungsgemäßer Elektromotor bekannt, der als Außenläufermotor ausgebildet ist, bei dem der Luftstrom einer Innenbelüftung vom Inneren des Motors durch mehrere Öffnungen einer Rotorhülse durch radiale Kanäle austritt, wobei die radialen Kanäle in der dem Motor zugewandten Innenseite einer Nabe eines Lüfterrades angeformt sind. Die radialen Kanäle münden in seitlichen Öffnungen der Nabe. Dabei sind die radialen Kanäle an der Innenseite der Nabe so gestaltet, dass ihr Querschnitt in Ausströmrichtung abnimmt, so dass eine Art Venturi-Effekt entsteht. Zusätzlich wird der Kühlungsluftstrom durch einen Ansaugeffekt des Luftstromes des Lüfterrades verstärkt, der an den seitlichen Öffnungen der Nabe vorbeiströmt. Hierbei wird die lnnenbelüftung des Motors durch Ausgestaltung des Hauptlüfterrades erzeugt. Der Luftstrom wird insbesondere durch im Innern des Hauptlüfterrades verlaufende Kanäle geführt, die von Öffnungen im Boden zu seitlichen Ausströmöffnungen führen. Hierbei weist das Lüfterrad keine Durchbrüche zur Stirnseite hin auf.

Der Erfindung liegt die Aufgabe zu Grunde, die Kühlung des Elektromotors weiter zu verbessern, indem der Luftstrom durch das Innere des Elektromotors erhöht wird und gleichzeitig ein Eindringen von Fremdpartikeln wie zum Beispiel Schmutz, Staub oder Feuchtigkeit erschwert wird.

Die Aufgabe wird mit den Mitteln des Anspruchs 1 gelöst, und die Unteransprüche bilden die Erfindung weiter.

Bei dem erfindungsgemäßen Elektromotor ist die Rotorabdeckung tellerförmig ausgebildet und besteht aus einem Tellerboden und einer Ringwand auf der die Ausströmöffnungen vorzugsweise gleichmäßig verteilt sind. Die so gestaltete Rotorabdeckung mit den auf der Ringwand positionierten Ausströmöffnungen erhöht den Unterdruck im Bereich des Glockenbodens, da der durch das Hauptlüfterrad erzeugte Unterdruck am Umfangsbereich des Hauptlüfterrads und damit im Bereich der Ausströmöffnungen am größten ist. Außerdem sitzen die Ausströmöffnungen bei dieser Ausführungsart am maximalen Radius der Rotorabdeckung. Dies bewirkt eine Erhöhung der auf die zwischen Rotorabdeckung und Glockenboden befindliche Luft einwirkenden Zentrifugalkraft. Zusätzlich wird durch den geschlossenen Tellerboden der Rotorabdeckung ein direkter axialer Eintritt von Fremdpartikeln vermieden. Außerdem wirkt die verstärkte Zentrifugalkraft auch auf eingedrungene Fremdpartikel und verbessert so eine selbstreinigende Funktion des Luftstroms im Inneren des Elektromotors durch ein Ausstoßen der Fremdpartikel aus den Ausströmöffnungen.

Gemäß der Erfindung besitzt die Rotorabdeckung an der der Rotorglocke zugewandten Innenseite des Tellerbodens der Rotorabdeckung mehrere radial verlaufende mit ihr fest verbundene Innenflügel, wobei zwei benachbarte Innenflügel zusammen mit der Ringwand und dem Tellerboden der Rotorabdeckung und dem Glockenboden der Rotorglocke eine Strömungskammer bilden, und jede Ausströmöffnung in der Ringwand mindestens einer Strömungskammer zugeordnet ist. Dies bewirkt eine zusätzliche Verstärkung des Luftstroms im Inneren des Motors, da die Rotationsbewegung der Luft in den Strömungskammern und damit die auf die Luft einwirkende Zentrifugalkraft durch die Innenflügel verstärkt wird, welches sich wiederum verstärkend auf den Luftstrom im Inneren des Motors auswirkt.

Bei der Erfindung ist jedem Durchbruch des Glockenbodens mindestens einer Strömungskammer zugeordnet. Der Unterdruck in den Strömungskammern saugt die Luft durch die Durchbrüche der Rotorglocke aus dem Inneren des Motors an.

Die Rotorabdeckung ist vorzugsweise aus Kunststoff gefertigt.

Die vorgenannten sowie beanspruchten und in den Ausführungsbeispielen beschriebenen erfindungsgemäß zu verwendenden Bauteile unterliegen in ihrer Größe, Form, Gestaltung, Materialauswahl und technischen Konzeptionen keinen besonderen Ausnahmebedingungen, so dass die in dem Anwendungsgebiet bekannten Auswahlkriterien uneingeschränkt Anwendung finden können.

Weitere Einzelheiten, Merkmale und vorteilhafte Weiterbildungen der Erfindung ergeben sich aus dem im Folgenden beschriebenen und in den Zeichnungen dargestellten Ausführungsbeispiel sowie aus den Unteransprüchen. Es zeigen:
- Fig. 1: eine Querschnittsansicht eines erfindungsgemäßen Elektromotors,
- Fig. 2: eine dreidimensionale Darstellung einer Außenansicht einer erfindungsgemäßen Rotorabdeckung des erfindungsgemäßen Elektromotors nach Fig. 1,
- Fig. 3: eine dreidimensionale Darstellung einer Innenansicht einer erfindungsgemäßen Rotorabdeckung des erfindungsgemäßen Elektromotors nach Fig. 1,
- Fig. 4: eine dreidimensionale Darstellung einer Außenansicht eines erfindungsgemäßen Rotors mit Hauptlüfterrad des erfindungsgemäßen Elektromotors nach Fig. 1.

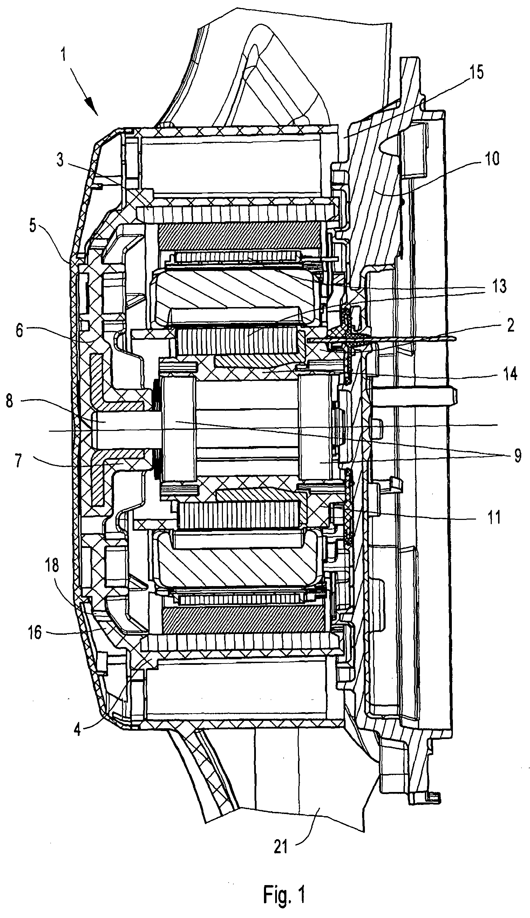

Bei der Ausführungsform nach Fig. 1 ist ein Elektromotor 1 mit einem an einem Kühlflansch 10 befestigten Stator 2 und einem außenlaufenden Rotor 3, bestehend aus einer Rotorglocke 4 und einer als Lüfterrad wirkenden Rotorabdeckung 5 abgebildet. Die Rotorglocke hat einen Glockenboden 6, der an seiner Innenseite eine mittige Rotornabe 7 aufweist und in der eine Motorwelle 8 befestigt ist, welche innerhalb des Stators 2 in Kugellagern 9 rotierend gelagert ist. Der Stator 2 besteht hauptsächlich aus einem bewickelten Statorblechpaket 13 mit Statorflansch 11 der an einem Kühlflansch 10 befestigt ist und einer nicht dargestellten Leiterplatte. Der Statorflansch 11 bildet in der Mitte ein Lagertragrohr 14 zum Aufnehmen der Kugellager 9. Das Statorblechpaket 13 ist mit einer inneren Öffnung versehen und auf dem Lagertragrohr 14 befestigt. Zwischen dem Kühlflansch 10 und der Stirnseite der Rotorglocke 4 befindet sich ein Luftspalt 15, der ein Einströmen von Luft in das Innere des Elektromotors 1 erlaubt.

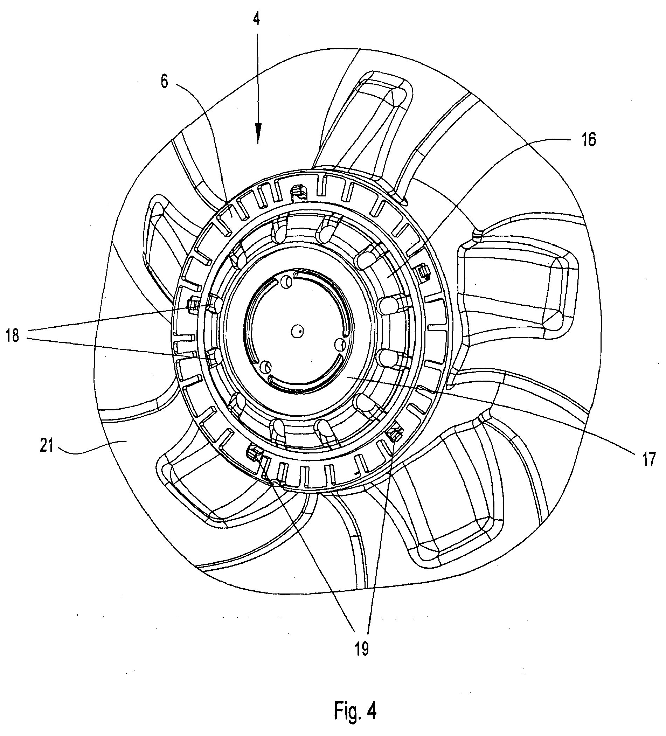

In Fig. 4 wird eine Ausführungsform der Rotorglocke 4 dargestellt, bei der der Glockenboden 6 mit einem konisch zulaufenden Ringbereich 16 in eine kreisförmige Endfläche mit einer Vertiefung 17 übergeht, an der sich im Zentrum des Bodens der die Rotornabe 7 anschließt. Im konischen Ringbereich 16 liegen mehrere Durchbrüche 18 am Rand der Vertiefung 17, die über den Ringbereich 16 vorzugsweise gleichmäßig verteilt sind. Außerdem besitzt der Glockenboden 6 mehrere Aufnahmeöffnungen 19, welche zur Befestigung der Rotorabdeckung 5 dienen. Ein Lüfterrad 21 ist am Außenumfang der Rotorglocke angebracht.

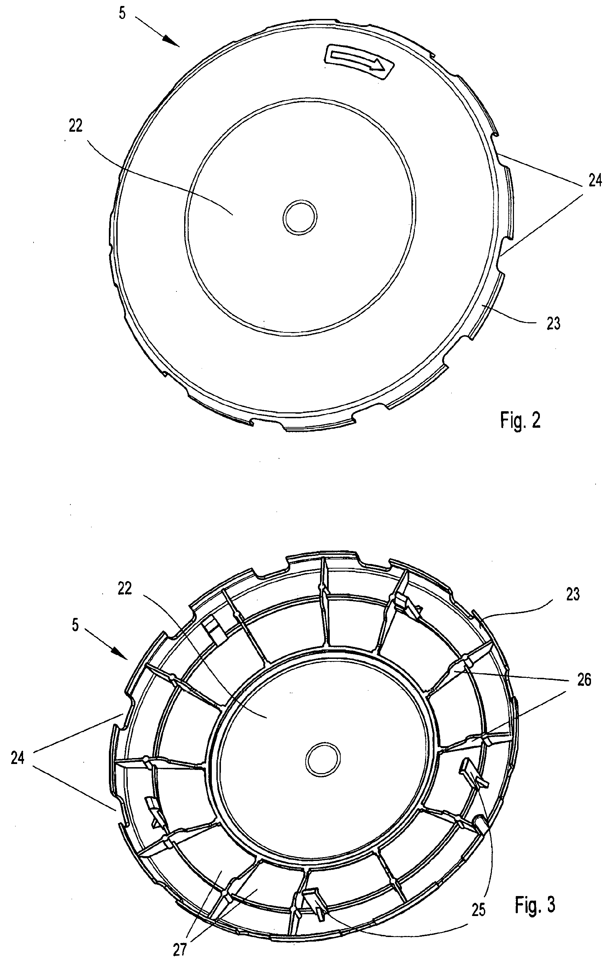

Die dargestellte Rotorabdeckung 5 in Fig. 2 und Fig. 3 ist tellerförmig ausgebildet und besteht aus einem vollständig geschlossenen Tellerboden 22 und einer Ringwand 23 mit vorzugsweise gleichmäßig in der Ringwand 23 verteilten Ausströmöffnungen 24. Sie weist auf der der Rotorglocke 4 zugewandten Innenseite des Tellerbodens 22 mehrere Rastarme 25 auf, die in die Aufnahmeöffnungen 19 des Glockenbodens 6 eingreifen und die Rotorabdeckung 5 mit der Rotorglocke 4 fest verbinden. Außerdem befinden sich auf der der Rotorglocke 4 zugewandten Innenseite des Tellerbodens 22 der Rotorabdeckung 5 mehrere radial verlaufende mit ihr fest verbundene Innenflügel 26, wobei sich die Innenflügel 26 der Rotorabdeckung 5 in ihrer Höhe der Außenkontur des Glockenbodens 6 der Rotorglocke 4 anpassen. Zwei benachbarte Innenflügel 26 bilden zusammen mit der Ringwand 23 und dem Tellerboden 22 der Rotorabdeckung 5 und dem Glockenboden 6 der Rotorglocke 4 eine Strömungskammer 27. Die Ausströmöffnungen 24 in der Ringwand 23 sind den Strömungskammern 27 zugeordnet, und jeder Durchbruch 18 des Glockenbodens 6 kann einer oder zwei Strömungskammern 27 zugeordnet sein, wobei im letzteren Fall der Innenflügel 26 über dem Durchbruch 18 angeordnet ist. Bei anderen Ausführungsformen könnte der Innenflügel 26 auch mittig zur Ausströmöffnung 24 verlaufen und mehreren Strömungskammern 27 zugeordnet sein oder mehrere Durchbrüche 18 des Glockenbodens 6 könnten einer Strömungskammer 27 zugeordnet sein. Der Außenumfangsradius des Tellerbodens 22 der Rotorabdeckung 5 entspricht dem Außenumfangsradius des Glockenbodens 6 der Rotorglocke 4, so dass die Außenumfangsflächen der Rotorabdeckung 5 und der Rotorglocke 4 glatt ineinander übergehen.

Die Rotorglocke und die Rotorabdeckung sind vorzugsweise aus Kunststoff hergestellt.

Die oben beschriebene Ausführungsform des Elektromotors bewirkt einen hoch effizienten Luftstromdurchsatz innerhalb des Elektromotors und optimiert damit den Kühlungs- und Reinigungseffekt des Luftstromes und schützt das Innere des Elektromotors vor Fremdpartikeln welche die Leistung und Lebenszeit der Bauteile des Elektromotors negative beeinflussen könnten.

Die Erfindung ist nicht auf die dargestellten und beschriebenen Ausführungsbeispiele beschränkt, sondern umfasst auch alle im Sinne der Erfindung, die durch die Ansprüche definiert ist, gleichwirkenden Ausführungen.

## Patentansprüche

1. Elektromotor (1) mit einem Stator (2) und einem außenlaufenden Rotor (3), bestehend aus einer Rotorglocke (4) mit einem am Außenumfang befestigtem Lüfterrad (21) und einer als Hilfs-Lüfterrad wirkenden Rotorabdeckung (5), wobei die Rotorglocke (4) mehrere Durchbrüche (18) in ihrem Glockenboden (6) aufweist, und die Rotorabdeckung (5) mehrere Ausströmöffnungen (24) aufweist,
**dadurch gekennzeichnet, dass** die Rotorabdeckung (5) tellerförmig ausgebildet ist und aus einem Tellerboden (22) und einer Ringwand (23) besteht, wobei der Außenumfangsradius des Tellerbodens (22) der Rotorabdeckung (5) dem Außenumfangsradius des Glockenbodens (6) der Rotorglocke (4) entspricht, und die Ausströmöffnungen (24) in der Ringwand (23) am maximalen Radius der Rotorabdeckung (5) vorzugsweise gleichmäßig verteilt sind, so dass die Ausströmöffnungen (24) am Umfangsbereich des Lüfterrrades (21) im Bereich des größten Unterdrucks liegen, und der Tellerboden (22) der Rotorabdeckung (5) vollständig geschlossen ist, wobei zur Ausbildung des Hilfs-Lüfterrades die der Rotorglocke (4) zugewandte Innenseite des Tellerbodens (22) der Rotorabdeckung (5) mehrere radial verlaufende mit ihr fest verbundene Innenflügel (26) aufweist, sowie zwei benachbarte Innenflügel (26) zusammen mit der Ringwand (23) und dem Tellerboden (22) der Rotorabdeckung (5) und dem Glockenboden (6) der Rotorglocke (4) eine Strömungskammer (27) bilden und jede Ausströmöffnung (24) in der Ringwand (23) mindestens einer Strömungskammer (27) zugeordnet ist.

2. Elektromotor (1) nach Anspruch 1,
**dadurch gekennzeichnet, dass** der Glockenboden (6) der Rotorglocke (4) einen Ringbereich (16) mit Durchbrüchen (18) aufweist die über den Umfang vorzugsweise gleichmäßig verteilt sind.

3. Elektromotor (1) nach Anspruch 1 oder 2,
**dadurch gekennzeichnet, dass** sich die Innenflügel (26) der Rotorabdeckung (5) in ihrer Höhe der Außenkontur des Glockenbodens (6) der Rotorglocke (4) anpassen.

4. Elektromotor (1) nach einem der Ansprüche 1 bis 3,
**dadurch gekennzeichnet, dass** die der Rotorglocke (4) zugewandte Innenseite des Tellerbodens (22) der Rotorabdeckung (5) mehrere Rastarme (25) aufweist.

5. Elektromotor (1) nach einem der Ansprüche 1 bis 4,
**dadurch gekennzeichnet, dass** der Glockenboden (6) der Rotorglocke (4) mehrere Aufnahmeöffnungen (19) aufweist.

6. Elektromotor (1) nach einem der Ansprüche 1 bis 5,
**dadurch gekennzeichnet, dass** die Rotorabdeckung (5) einstückig aus Kunststoff gefertigt ist.

7. Rotorabdeckung (5) zur Verwendung mit einem Elektromotor (1) gemäß Anspruch 1, mit einem Stator (2) und einem außenlaufenden Rotor (3) mit einer Rotorglocke (4), wobei die Rotorglocke (4) mehrere Durchbrüche (18) in ihrem Glockenboden (6) aufweist,
**gekennzeichnet durch** eine mittels eines Tellerbodens (22) und einer Ringwand (23) tellerförmigen Ausgestaltung und mehrere in der Ringwand (23) vorzugsweise gleichmäßig verteilte Ausströmöffnungen (24), wobei die Rotorabdeckung (5) als Lüfterrad wirkt und wobei der Tellerboden (22) der Rotorabdeckung (5) vollständig geschlossen ist und wobei die der Rotorglocke (4) zugewandte Innenseite des Tellerbodens (22) der Rotorabdeckung (5) mehrere radial verlaufende mit ihr fest verbundene Innenflügel (26) aufweist.

8. Rotorabdeckung (5) nach Anspruch 7,
**gekennzeichnet durch** die Merkmale nach einem der Ansprüche 2 bis 6.

## Claims

1. An electric motor (1) having a stator (2) and an external rotor (3) consisting of a rotor bell (4) with a fan impeller (21) secured to the outer circumference and a rotor cover (5) acting as an auxiliary fan impeller, wherein the rotor bell (4) has a plurality of apertures (18) in its bell base (6) and the rotor cover (5) has a plurality of outflow openings (24), **characterised in that** the rotor cover (5) is plate-shaped and is composed of a plate base (22) and an annular wall (23), wherein the outer circumferential radius of the plate base (22) of the rotor cover (5) corresponds to the outer circumferential radius of the bell base (6) of the rotor bell (4), and the outflow openings (24) are distributed, preferably uniformly, in the annular wall (23) at the maximum radius of the rotor cover (5), so that the outflow openings (24) lie at the circumferential region of the fan impeller (21) in the region of the greatest underpressure, and the plate base (22) of the rotor cover (5) is completely closed, wherein to form the auxiliary fan impeller, the inner side, facing the rotor bell (4), of the plate base (22) of the rotor cover (5) has a plurality of radially extending inner vanes (26) securely connected thereto and two adjacent inner vanes (26), together with the annular wall (23) and the plate base (22) of the rotor cover (5) and the bell base (6) of the rotor bell (4), form a flow chamber (27) and each outflow opening (24) in the annular wall (23) is associated with at least one flow chamber (27).

2. An electric motor (1) according to claim 1, **characterised in that** the bell base (6) of the rotor bell (4) has an annular region (16) with apertures (18) distributed over the circumference, preferably in a uniform manner.

3. An electric motor (1) according to claim 1 or 2, **characterised in that** the inner vanes (26) of the rotor cover (5) are matched in height to the external contour of the bell base (6) of the rotor bell (4).

4. An electric motor (1) according to any one of claims 1 to 3, **characterised in that** the inner side, facing the rotor bell (4), of the plate base (22) of the rotor cover (5) has a plurality of locking arms (25).

5. An electric motor (1) according to any one of claims 1 to 4, **characterised in that** the bell base (6) of the rotor bell (4) has a plurality of receiving openings (19).

6. An electric motor (1) according to any one of claims 1 to 5, **characterised in that** the rotor cover (5) is manufactured in one piece from plastics material.

7. A rotor cover (5) for use with an electric motor (1) according to claim 1, having a stator (2) and an external rotor (3) with a rotor bell (4), wherein the rotor bell (4) has a plurality of apertures (18) in its bell base (6), **characterised by** a plate-shaped design, by means of a plate base (22) and an annular wall (23), and a plurality of outflow openings (24) distributed, preferably uniformly, in the annular wall (23), wherein the rotor cover (5) acts as a fan impeller and wherein the plate base (22) of the rotor cover (5) is completely closed and wherein the inner side, facing the rotor bell (4), of the plate base (22) of the rotor cover (5) has a plurality of radially extending inner vanes (26) securely connected thereto.

8. A rotor cover (5) according to claim 7, **characterised by** the features according to any one of claims 2 to 6.

## Revendications

1. Moteur électrique (1) avec un stator (2) et un rotor (3) extérieur, se composant d'une cloche de rotor (4) avec une roue de ventilateur (21) fixée sur la périphérie extérieure et un recouvrement de rotor (5) agissant comme une roue de ventilateur auxiliaire, dans lequel la cloche de rotor (4) présente plusieurs percements (18) dans son fond de cloche (6) et le recouvrement de rotor (5) présentant plusieurs orifices de sortie (24),
**caractérisé en ce que** le recouvrement de rotor (5) est réalisé comme un plateau et se compose d'un fond de plateau (22) et d'une paroi annulaire (23), dans lequel le rayon périphérique extérieur du fond de plateau (22) du recouvrement de rotor (5) correspond au rayon périphérique extérieur du fond de cloche (6) de la cloche de rotor (4), et **en ce que** les orifices de sortie (24) sont réparties de préférence uniformément dans la paroi annulaire (23) sur le rayon maximal du recouvrement de rotor (5) de sorte que les orifices de sortie (24) se situent sur la zone périphérique de la roue de ventilateur (21) dans la zone de la plus grande dépression, et le fond de plateau (22) du recouvrement de rotor (5) est complètement fermé, dans lequel pour la réalisation de la roue de ventilateur auxiliaire le côté intérieur tourné vers la cloche de rotor (4) du fond de plateau (22) du recouvrement de rotor (5) présente plusieurs ailes intérieures (26) s'étendant radialement, reliées fixement avec celui-ci, et **en ce que** deux ailes intérieures (26) contiguës forment une chambre d'échappement (27) conjointement avec la paroi intérieure (23) et le fond de plateau (22) du recouvrement de rotor (5) et du fond de cloche (6) de la cloche de rotor (4) et chaque ouverture d'échappement (24) dans la paroi annulaire (23) est associée au moins à une chambre d'échappement (27).

2. Moteur électrique (1) selon la revendication 1,
**caractérisé en ce que** le fond de cloche (6) de la cloche de rotor (4) présente une zone annulaire (16) avec des percements (18) qui sont répartis de préférence uniformément sur la périphérie.

3. Moteur électrique (1) selon la revendication 1 ou 2,
**caractérisé en ce que** les ailes intérieures (26) du recouvrement de rotor (5) s'adaptent dans leur hauteur au contour extérieur du fond de cloche (6) de la cloche de rotor (4).

4. Moteur électrique (1) selon l'une quelconque des revendications 1 à 3,
**caractérisé en ce que** le côté intérieur tourné vers la cloche de rotor (4) du fond de plateau (22) du recouvrement de rotor (5) présente plusieurs bras d'encliquetage (25).

5. Moteur électrique (1) selon l'une quelconque des revendications 1 à 4,
**caractérisé en ce que** le fond de cloche (6) de la cloche de rotor (4) présente plusieurs ouvertures de réception (19).

6. Moteur électrique (1) selon l'une quelconque des revendications 1 à 5,
**caractérisé en ce que** le recouvrement de rotor (5) est fabriqué d'un seul tenant en plastique.

7. Recouvrement de rotor (5) pour une utilisation avec un moteur électrique (1) selon la revendication 1, avec un stator (2) et un rotor (3) extérieur avec une cloche de rotor (4), dans lequel la cloche de rotor (4) présente plusieurs percements (18) dans son fond de cloche (6),
**caractérisé par** une configuration en plateau au moyen d'un fond de plateau (22) et d'une paroi annulaire (23) et plusieurs orifices de sortie (24) réparties de préférence uniformément dans la paroi annulaire (23), dans lequel le recouvrement de rotor (5) agit comme une roue de ventilateur et le fond du plateau (22) du recouvrement de rotor (5) est complètement fermé et le côté intérieur tourné vers la cloche de rotor (4) du fond de plateau (22) du recouvrement de rotor (5) présente plusieurs ailes intérieures (26) s'étendant radialement, reliées fixement à celui-ci.

8. Recouvrement de rotor (5) selon la revendication 7,
**caractérisé par** les caractéristiques selon l'une quelconque des revendications 2 à 6.
